# EUROPEAN PATENT APPLICATION

(11) **EP 4 607 457 A1**
(43) Date of publication of application: **27.08.2025**
(21) Application number: 24186485.9
(22) Date of filing: 04.07.2024
(51) Int. Cl.: G06T 7/00

(54) **INFORMATION PROCESSING SYSTEM, PROGRAM, AND INFORMATION PROCESSING METHOD**

(30) Priority: 26.02.2024 JP 2024026721
(71) Applicant: FUJIFILM Business Innovation Corp., Minato-ku Tokyo (JP)
(72) Inventor: TAKAHASHI, Kazuyuki, Yokohama-shi, Kanagawa (JP); HASEGAWA, Maki, Yokohama-shi, Kanagawa (JP); TOMODA, Kyotaro, Yokohama-shi, Kanagawa (JP)
(74) Representative: Kurig, Thomas

(57) **Abstract**

An information processing system includes a processor configured to evaluate a quality of a printed material printed by a printing device by comparing an original print image with a scanned image acquired by scanning the printed material, and in a case where a defect that is estimated to affect an evaluation result occurs in the scanned image, notify a user that the defect occurs.

## Description

### BACKGROUND OF THE INVENTION

### (i) Field of the Invention

The present disclosure relates to an information processing system, a program, and an information processing method.

### (ii) Description of Related Art

JP1997-218956A discloses a prediction method that can accurately predict a comprehensive color image quality score by comprehensively considering a plurality of image quality physical and psychological factors involved in the comprehensive color image quality score.

JP1993-110833A discloses an image editing device that, in a case where a manuscript read by a scanner is enlarged or reduced and texts are crushed and become unreadable or an image is deteriorated due to excessive enlargement, warns an operator of the above case and prevents unnecessary output.

### SUMMARY OF THE INVENTION

It is considered to scan a printed material printed by a printing device and compare an original print image with a scanned image to evaluate the quality of the printed material. The quality of the printed material is evaluated, for example, by indexing how faithfully the shape and/or density of the scanned image are reproduced with respect to the shape and/or density of the original print image.

Here, in a case where, for example, defects such as colored dots, white dots, colored lines, or white lines occur in the scanned image, this may affect the evaluation result of the quality of the printed material.

An object of the present invention is to provide an information processing system, a program, and an information processing method capable of, in a case where a defect that is estimated to affect an evaluation result occurs in a scanned image, making a user recognize that the defect may affect the evaluation result.

According to a first aspect of the present invention, there is provided an information processing system including: a processor configured to evaluate a quality of a printed material printed by a printing device by comparing an original print image with a scanned image acquired by scanning the printed material; and in a case where a defect that is estimated to affect an evaluation result occurs in the scanned image, notify a user that the defect occurs.

According to a second aspect of the present invention, in the information processing system according to the first aspect, the processor may be configured to display a defect position on the scanned image.

According to a third aspect of the present invention, in the information processing system according to the second aspect, the processor may be configured to distinguish and display for each defect whether the defect is a defect that occurs one-off on only one printed material or a defect that may occur continuously over a plurality of printed materials.

According to a fourth aspect of the present invention, in the information processing system according to the third aspect, the processor may be configured to display a defect that occurs on only one scanned image, among a plurality of the scanned images corresponding to the same original print image, as the defect that occurs one-off on only one printed material, and display a defect that occurs continuously over the plurality of scanned images as the defect that may occur continuously over the plurality of printed materials.

According to a fifth aspect of the present invention, in the information processing system according to any one of the first to fourth aspects, the processor may be configured to detect a defect from a newly acquired scanned image by inputting the newly acquired scanned image to a machine learning model trained using the scanned image and the defect included in the scanned image as teacher data.

According to a sixth aspect of the present invention, in the information processing system according to any one of the first to fifth aspects, the processor may be configured to provide a notification of a degree of influence of the defect on the evaluation result.

According to a seventh aspect of the present invention, in the information processing system according to the sixth aspect, the processor may be configured to acquire information on the degree of influence of the defect by using a scanned image from which the defect is removed via a complementation process.

According to an eighth aspect of the present invention, there is provided a program causing a computer to execute: evaluating a quality of a printed material printed by a printing device by comparing an original print image with a scanned image acquired by scanning the printed material; and in a case where a defect that is estimated to affect an evaluation result occurs in the scanned image, notifying a user that the defect occurs.

According to a ninth aspect of the present invention, there is provided an information processing method including: evaluating a quality of a printed material printed by a printing device by comparing an original print image with a scanned image acquired by scanning the printed material; and in a case where a defect that is estimated to affect an evaluation result occurs in the scanned image, notifying a user that the defect occurs.

According to the information processing system of the first aspect of the present invention, in a case where a defect that is estimated to affect an evaluation result occurs in the scanned image, it is possible to make the user recognize that the defect may affect the evaluation result.

According to the information processing system of the second aspect of the present invention, it is possible to make the user recognize which defect on the scanned image affects the evaluation result.

According to the information processing system of the third aspect of the present invention, it is possible to make the user recognize whether or not the quality deterioration due to the defect is a one-off quality deterioration of only one printed material.

According to the information processing system of the fourth aspect of the present invention, it is possible to identify a one-off defect and a continuous defect.

According to the information processing system of the fifth aspect of the present invention, it is possible to automatically detect the defect on the basis of the teacher data.

According to the information processing system of the sixth aspect of the present invention, it is possible to make the user recognize the degree of influence of the defect.

According to the information processing system of the seventh aspect of the present invention, it is possible to make the user recognize the evaluation result in a case where there is no defect.

According to the program of the eighth aspect of the present invention, in a case where a defect that is estimated to affect an evaluation result occurs in the scanned image, it is possible to make the user recognize that the defect may affect the evaluation result.

According to the information processing method of a ninth aspect of the present invention, in a case where a defect that is estimated to affect an evaluation result occurs in the scanned image, it is possible to make the user recognize that the defect may affect the evaluation result.

### BRIEF DESCRIPTION OF THE DRAWINGS

Exemplary embodiment(s) of the present invention will be described in detail based on the following figures, wherein:
Fig. 1 is a diagram showing a system configuration of a printing system according to an exemplary embodiment of the present disclosure;
Fig. 2 is a block diagram showing a hardware configuration of the printing system;
Fig. 3 is a block diagram showing a functional configuration of the printing system;
Fig. 4 is a diagram showing an example of an original print image for evaluation;
Fig. 5 is a diagram showing an example of a display screen showing a result of evaluation of quality of a scanned image;
Fig. 6 is a diagram showing an example of a display screen showing a result of evaluation of quality of a scanned image;
Fig. 7 is a diagram showing an example of a display screen showing a result of evaluation of quality of a scanned image;
Fig. 8 is a diagram for explaining an AI model in the printing system;
Fig. 9 is a diagram showing an example of a display screen showing a result of evaluation of quality of a scanned image;
Fig. 10 is a diagram showing an example of a display screen showing a result of evaluation of quality of a scanned image; and
Fig. 11 is a diagram showing an example of a display screen showing a result of evaluation of quality of a scanned image.

### DETAILED DESCRIPTION OF THE INVENTION

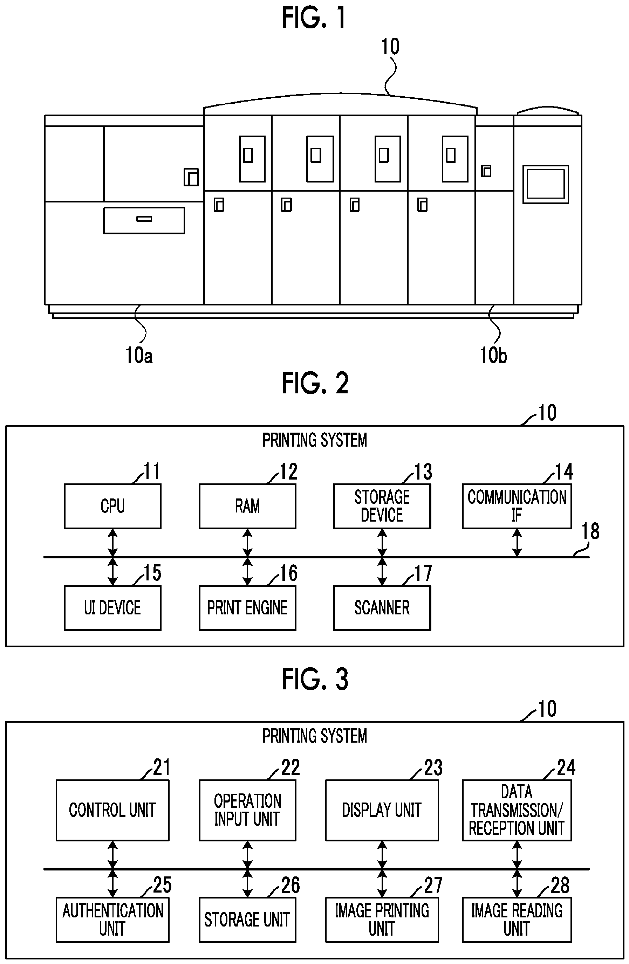

Hereinafter, an exemplary embodiment for embodying the technique of the present disclosure will be described in detail with reference to the drawings. Fig. 1 is a diagram showing a system configuration of a printing system 10 that is an exemplary embodiment of an information processing system of the present disclosure.

As shown in Fig. 1, a printing system 10 includes a printing device 10a and an inspection device 10b that performs a quality inspection of a printed material printed by the printing device 10a.

In the printing system 10, the printed material printed by the printing device 10a is transported to the inspection device 10b and is scanned by the inspection device 10b.

The printing system 10 can evaluate the quality of the printed material by comparing the original print image with a scanned image acquired by scanning the printed material printed by the printing device 10a with the inspection device 10b.

Next, the hardware configuration of the printing system 10 of the present exemplary embodiment will be described. Fig. 2 is a block diagram showing a hardware configuration of the printing system 10.

As shown in Fig. 2, the printing system 10 includes a central processing unit (CPU) 11, a random access memory (RAM) 12, a storage device 13 such as a hard disk drive, a communication interface (abbreviated as IF) 14, a user interface (abbreviated as UI) device 15 including a touch panel or a liquid crystal display and a keyboard, a print engine 16, and a scanner 17. These components are connected to each other via a control bus 18.

The CPU 11 is a processor that controls an operation of the printing system 10 by executing a predetermined process based on a control program stored in the RAM 12 or the storage device 13. In the present exemplary embodiment, the CPU 11 is described as the processor reading and executing the control program stored in the RAM 12 or the storage device 13, and the present invention is not limited thereto. The control program may be provided in a form recorded on a computer readable recording medium. For example, this program may be provided in the form recorded on an optical disk such as a compact disc (CD)-read only memory (ROM) and a digital versatile disc (DVD)-ROM, or the form recorded on a semiconductor memory such as a universal serial bus (USB) memory and a memory card. Further, the control program may be acquired from the external device via a communication line connected to the communication IF 14.

The communication IF 14 transmits and receives data to and from an external device or the like. The UI device 15 accepts an instruction input from a user. The print engine 16 is built in the printing device 10a and prints an image on a recording medium such as printing paper through steps such as charging, exposure, development, transfer, and fixing. The scanner 17 is built in the inspection device 10b and reads the printed material printed by the printing device 10a as image data.

Next, a functional configuration of the printing system 10 according to the present exemplary embodiment will be described. Fig. 3 is a block diagram showing a functional configuration of the printing system 10.

As shown in Fig. 3, the printing system 10 according to the present exemplary embodiment includes a control unit 21, an operation input unit 22, a display unit 23, a data transmission/reception unit 24, an authentication unit 25, a storage unit 26, an image printing unit 27, and an image reading unit 28.

The control unit 21 controls the operation of the entire printing system 10. The operation input unit 22 inputs information on various operations performed by the user. The display unit 23 is controlled by the control unit 21 and displays various types of information to the user. The data transmission/reception unit 24 transmits and receives data to and from an external device through facsimile communication or Internet communication. The authentication unit 25 executes an authentication process for the user who tries to use the printing system 10.

The storage unit 26 stores a control program for controlling an operation of the printing system 10, various types of data such as an original print image and a scanned image. The image printing unit 27 prints the image on a recording medium such as printing paper. The image reading unit 28 reads the printed material that is printed, as image data.

In the printing system 10 according to the present exemplary embodiment, the printed material printed by the printing device 10a is scanned by the inspection device 10b to acquire a scanned image, and the original print image and the scanned image are compared with each other to evaluate the quality of the printed material. The quality of the printed material is evaluated, for example, by scoring how faithfully the shape and/or density of the scanned image are reproduced with respect to the shape and/or density of the original print image.

Here, in a case where, for example, defects such as colored dots, white dots, colored lines, or white lines occur in the scanned image, this may affect the evaluation result of the quality of the printed material.

Therefore, in the printing system 10 according to the present exemplary embodiment, the control unit 21 evaluates a quality of a printed material by comparing an original print image with a scanned image, and in a case where a defect that is estimated to affect an evaluation result occurs in the scanned image, the control unit 21 notifies a user that a defect occurs and makes the user recognize that the defect may affect the evaluation result.

Hereinafter, the quality evaluation of the printed material in the printing system 10 according to the present exemplary embodiment will be described in detail.

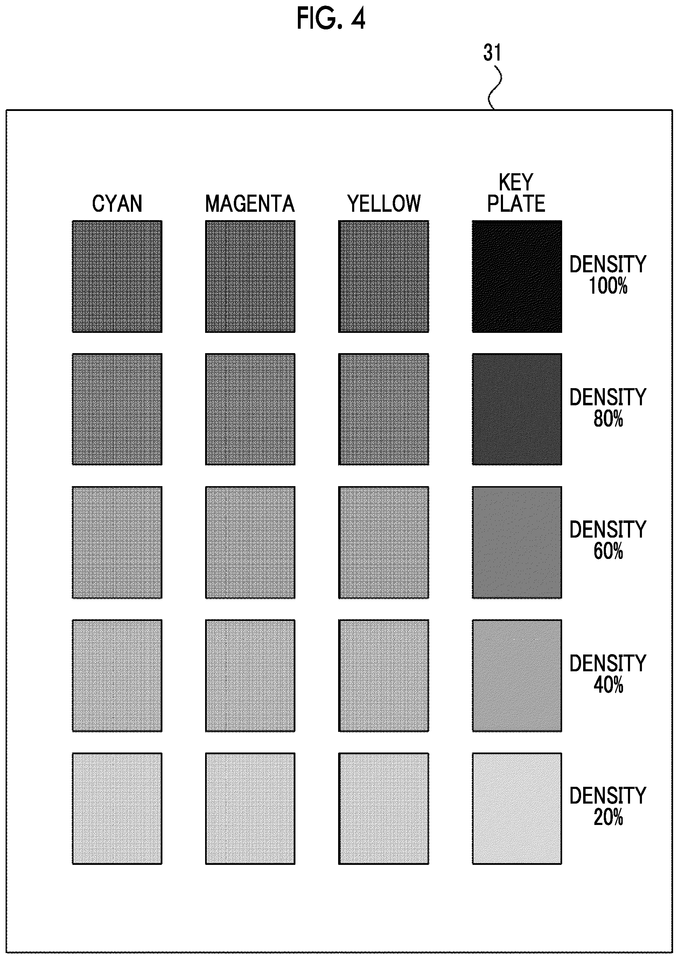

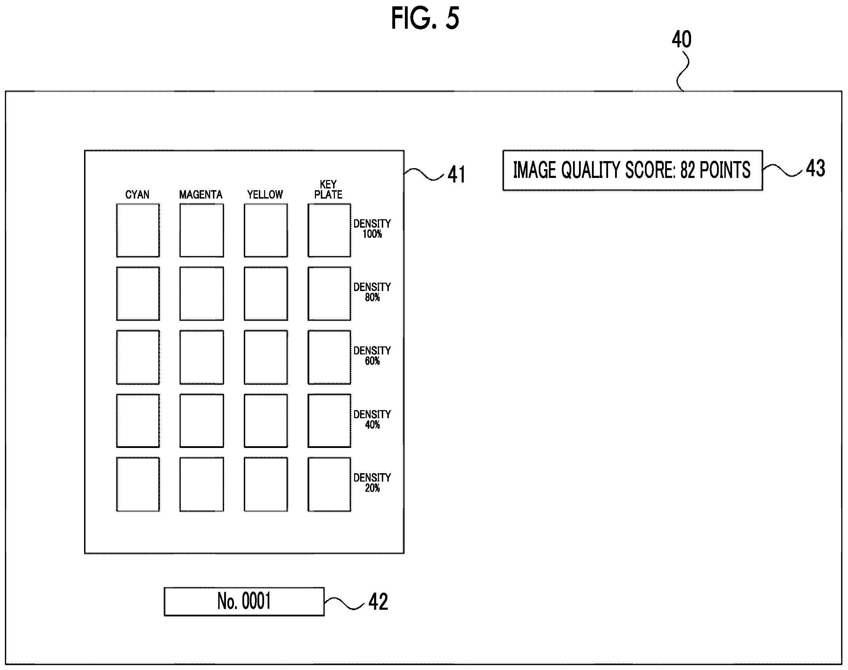

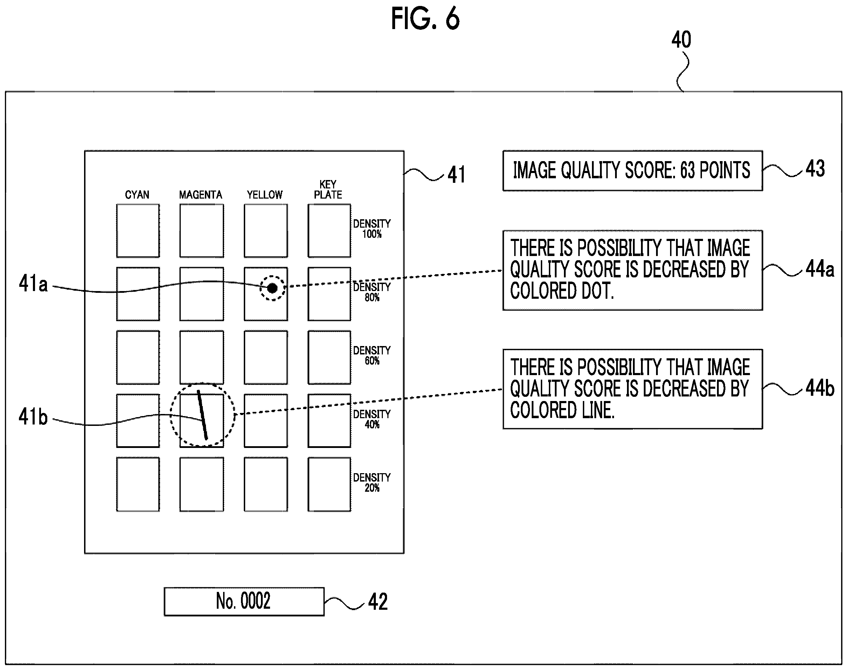

As the original print image in a case of evaluating the quality of the printed material, an image for evaluation may be used, or a normal image may be used. Here, a case where an original print image for evaluation is used will be described. Fig. 4 is a diagram showing an example of an original print image 31 for evaluation. Fig. 5 is a diagram showing an example of a display screen 40 showing a result of the evaluation of the quality of a scanned image 41. In the example of the display screen 40 in Fig. 5, the shade of the scanned image 41 is not displayed for convenience. The same applies to the display screen 40 in Fig. 6 and subsequent figures.

As shown in Fig. 4, the original print image 31 for evaluation is a four-color test pattern in which cyan, magenta, and yellow, which are three primary colors, and black, which is a key plate, are added, and has areas of 100% density, 80% density, 60% density, 40% density, and 20% density for each color.

The control unit 21 causes the image printing unit 27 to print the printed material based on the original print image 31 and causes the image reading unit 28 to scan the printed material to acquire the scanned image 41 (see Fig. 5).

The control unit 21 compares the original print image 31 with the scanned image 41 to evaluate the quality of the printed material, and as shown in Fig. 5, displays a display screen 40 showing the result of the evaluation of the quality with respect to the scanned image 41 on the display unit 23.

On the display screen 40, the scanned image 41, identification information 42 for identifying the scanned image 41, and an image quality score 43 that is a result of evaluating the quality of the scanned image 41 are displayed.

The image quality score 43 is a score of how faithfully the scanned image 41 is reproduced with respect to the original print image 31, and is scored by evaluating a case where the scanned image 41 is completely reproduced as 100 points.

As shown in Fig. 6, in a case where defects such as a colored dot 41a and a colored line 41b occur in the scanned image 41, these defects may affect the evaluation result of the quality. Therefore, in a case where defects such as the colored dots 41a and the colored lines 41b occur in the scanned image 41, the control unit 21 notifies the user that the defects occur.

The control unit 21 may perform the notification to the user in any manner. In Fig. 6, as an example, the control unit 21 performs the notification by displaying comment boxes 44a and 44b for each defect on the display screen 40.

Specifically, in a case where the colored dot 41a occurs in the scanned image 41, a comment box 44a displaying a comment "There is a possibility that the image quality score is decreased by the colored dot." is displayed.

In addition, in a case where the colored line 41b occurs in the scanned image 41, the comment box 44b displaying the comment "There is a possibility that the image quality score is decreased by the colored line." is displayed.

In this case, as shown in Fig. 6, the control unit 21 may further display the defect position on the scanned image 41.

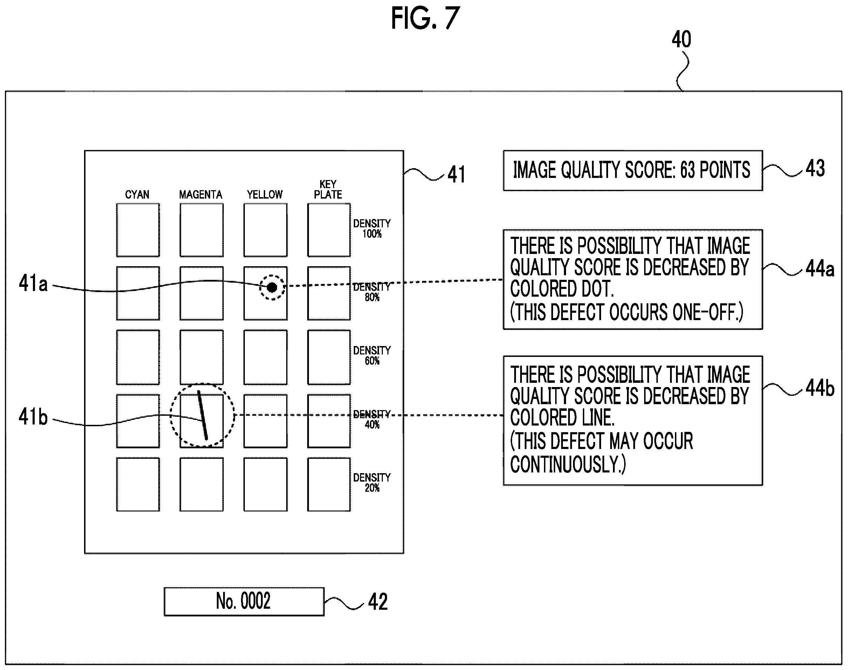

In addition, as shown in Fig. 7, the control unit 21 may distinguish and display for each defect whether the defect is a defect that occurs one-off on only one printed material or a defect that may occur continuously over a plurality of printed materials.

In Fig. 7, for example, for the colored dot 41a, a comment "(This defect occurs one-off)" is added in the comment box 44a to display that the colored dot 41a is a defect that occurs one-off on only one printed material.

In addition, for the colored line 41b, a comment "(This defect may occur continuously.)" is added in the comment box 44b to display that the colored line 41b is a defect that may occur continuously over a plurality of printed materials.

It should be noted that, whether or not the defect that occurs on the scanned image 41 is a defect that occurs one-off on only one printed material or a defect that may occur continuously over a plurality of printed materials may be distinguished based on the one printed material or may be distinguished based on the plurality of printed materials.

In a case of distinguishing a defect based on one printed material, whether or not the defect is a defect that occurs one-off on only one printed material or a defect that may occur continuously over a plurality of printed materials may be distinguished by acquiring in advance the characteristics of a defect that occurs one-off and the characteristics of a defect that occurs continuously, and comparing these characteristics of the defect with the characteristics of defects that occur on the scanned image 41.

In addition, in a case of distinguishing a defect based on a plurality of printed materials, the control unit 21 may display the defect that occurs only on one scanned image among a plurality of scanned images corresponding to the same original print image, as a defect that occurs one-off on only one printed material.

In addition, the control unit 21 may display a defect that continuously occur over a plurality of scanned images corresponding to the same original print image, among the plurality of scanned images, as a defect that may continuously occur over the plurality of printed materials.

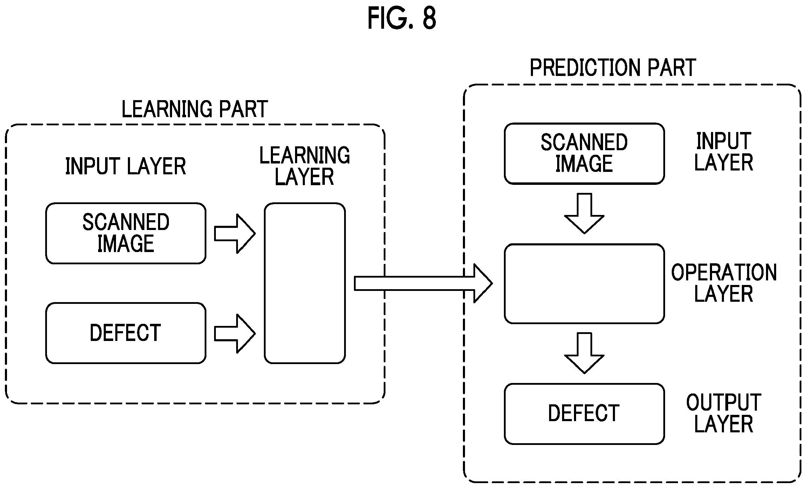

In addition, as shown in Fig. 8, the control unit 21 may detect a defect from a newly acquired scanned image by inputting the newly acquired scanned image to a machine learning model trained using the scanned image and the defect included in the scanned image as teacher data.

Specifically, in an AI model in the printing system 10, first, in a learning part, the scanned image and the defect included in the scanned image are input in an input layer, and a machine learning model that is trained by using the data input in the input layer as teacher data is generated in a learning layer.

In the AI model in the printing system 10, in a prediction part, the scanned image 41 is input in the input layer, a defect included in the scanned image 41 is extracted by using the learning model generated in the learning part in the operation layer, and the extracted defect is output in an output layer.

In the AI model, not only the defect may be extracted but also the type of defect may be identified. In this case, the scanned image, and the defect included in the scanned image and the type of the defect may be input in the input layer of the learning part, and a machine learning model that is trained by using the data input in the input layer as teacher data may be generated in the learning layer.

Here, the type of defect may be a type based on the color and shape of the defect, such as a colored dot, a white dot, a colored line, or a white line. In addition, the type of a defect may be a type based on the occurrence frequency, such as a defect that occurs one-off on only one printed material or a defect that may occur continuously over a plurality of printed materials. In addition, the type of defect may be a type in which a type based on the color and shape of the defect and a type based on the occurrence frequency are combined.

In addition, the control unit 21 may also provide a notification of a degree of influence of the defect on the evaluation result.

In this case, the control unit 21 may acquire information on the degree of the influence of the defect by using the scanned image 41 from which the defect has been removed via a complementation process. Specifically, the information on the degree of the influence can be acquired by comparing the image quality score of the scanned image 41 with the image quality score of the scanned image 41 from which the defect has been removed via the complementation process.

In a case where there are a plurality of defects in the scanned image 41, information on the degree of the influence may be acquired for each defect, or information on the degree of the influence of the plurality of defects may be acquired collectively.

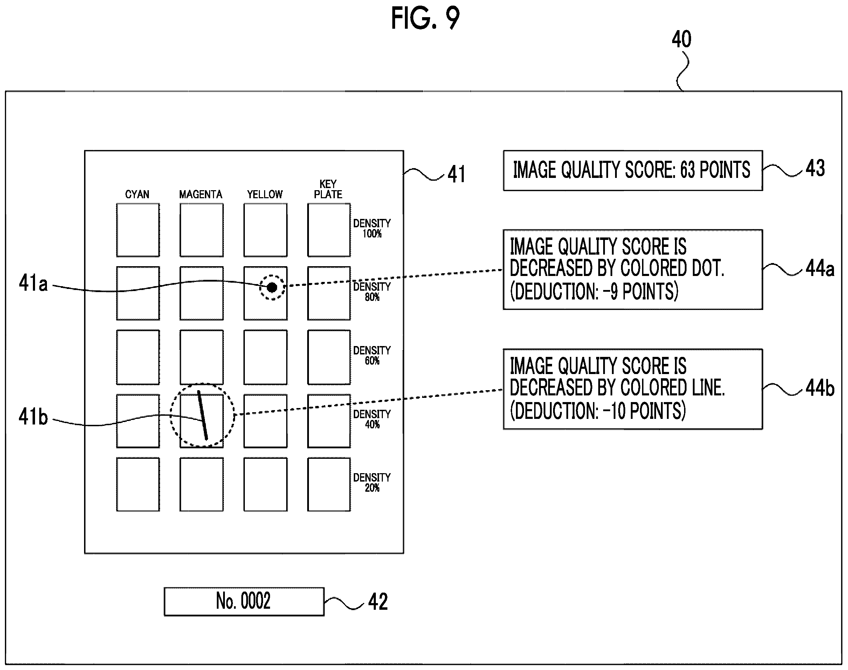

As shown in Fig. 9, for the notification of the degree of influence of the defect, the degree of influence of the defect on the image quality score may be displayed for each defect.

In Fig. 9, for example, for the colored dot 41a, a comment "(deduction: -9 points)" is added in the comment box 44a, and the degree of influence of the colored dot 41a on the image quality score is displayed. In addition, for the colored line 41b, a comment "(deduction: -10 points)" is added in the comment box 44b to display the degree of influence of the colored line 41b on the image quality score.

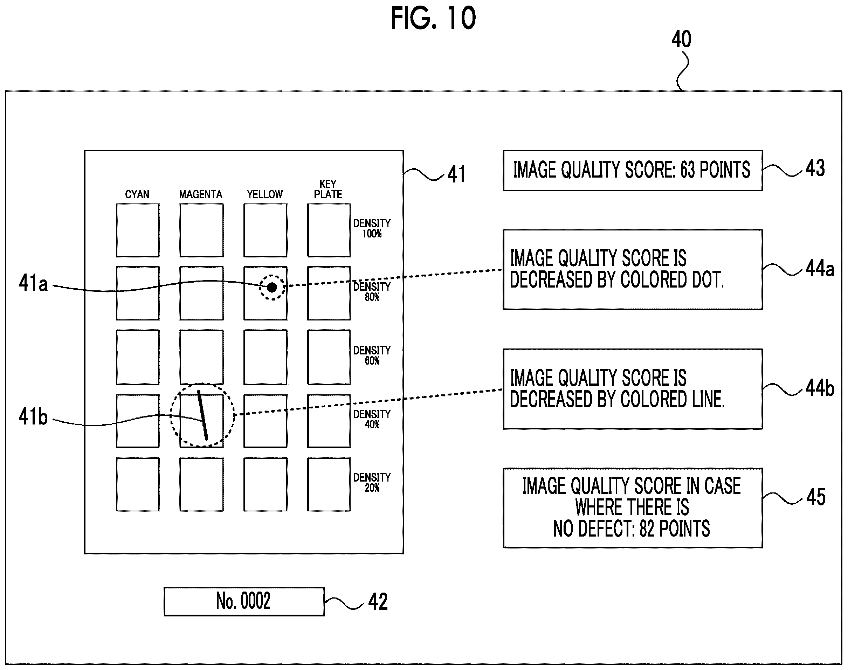

In addition, as shown in Fig. 10, for the notification of the degree of influence of the defect, an image quality score 45 in a case where there is no defect may be displayed.

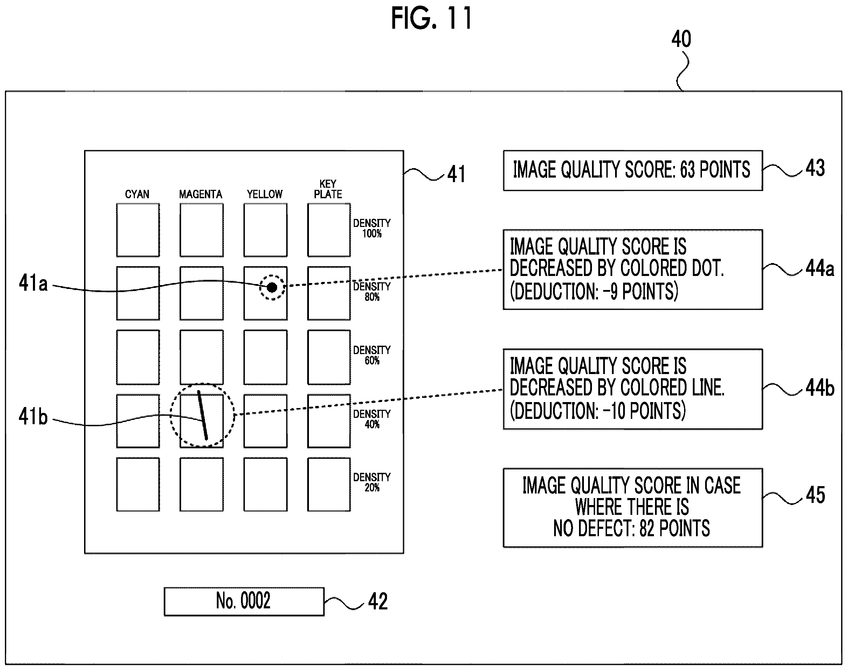

In addition, as shown in Fig. 11, for the notification of the degree of influence of the defect, both the degree of influence of the defect on the image quality score and the image quality score 45 in a case where there is no defect may be displayed for each defect.

### [Modification Example]

Although the printing system 10 which is one exemplary embodiment of the information processing system according to the present disclosure has been described above, the technology of the present disclosure is not limited to the above-described exemplary embodiment and can be modified as appropriate.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### [Supplementary Notes]

The following supplementary notes are further disclosed regarding the above-described exemplary embodiment.
(((1))) An information processing system comprising:
   a processor configured to:
   evaluate a quality of a printed material printed by a printing device by comparing an original print image with a scanned image acquired by scanning the printed material; and
   in a case where a defect that is estimated to affect an evaluation result occurs in the scanned image, notify a user that the defect occurs.
(((2))) The information processing system according to (((1))), wherein the processor is configured to:
   display a defect position on the scanned image.
(((3))) The information processing system according to (((2))), wherein the processor is configured to:
   distinguish and display for each defect whether the defect is a defect that occurs one-off on only one printed material or a defect that may occur continuously over a plurality of printed materials.
(((4))) The information processing system according to (((3))), wherein the processor is configured to:
   display a defect that occurs on only one scanned image, among a plurality of the scanned images corresponding to the same original print image, as the defect that occurs one-off on only one printed material, and display a defect that occurs continuously over the plurality of scanned images as the defect that may occur continuously over the plurality of printed materials.
(((5))) The information processing system according to any one of (((1))) to (((4))), wherein the processor is configured to:
   detect a defect from a newly acquired scanned image by inputting the newly acquired scanned image to a machine learning model trained using the scanned image and the defect included in the scanned image as teacher data.
(((6))) The information processing system according to any one of (((1))) to (((5))), wherein the processor is configured to:
   provide a notification of a degree of influence of the defect on the evaluation result.
(((7))) The information processing system according to (((6))), wherein the processor is configured to:
   acquire information on the degree of influence of the defect by using a scanned image from which the defect is removed via a complementation process.
(((8))) A program causing a computer to execute:
   evaluating a quality of a printed material printed by a printing device by comparing an original print image with a scanned image acquired by scanning the printed material; and
   in a case where a defect that is estimated to affect an evaluation result occurs in the scanned image, notifying a user that the defect occurs.

The effects of the configuration of the supplementary notes will be described below.

According to the information processing system of (((1))), in a case where a defect that is estimated to affect an evaluation result occurs in the scanned image, it is possible to make the user recognize that the defect may affect the evaluation result.

According to the information processing system of (((2))), it is possible to make the user recognize which defect on the scanned image affects the evaluation result.

According to the information processing system of (((3)))), it is possible to make the user recognize whether or not the quality deterioration due to the defect is a one-off quality deterioration of only one printed material.

According to the information processing system of (((4))), it is possible to identify a one-off defect and a continuous defect.

According to the information processing system of ((5)), it is possible to automatically detect the defect on the basis of the teacher data.

According to the information processing system of (((6))), it is possible to make the user recognize the degree of influence of the defect.

According to the information processing system of (((7))), it is possible to make the user recognize the evaluation result in a case where there is no defect.

According to the program of (((8))), in a case where a defect that is estimated to affect an evaluation result occurs in the scanned image, it is possible to make the user recognize that the defect may affect the evaluation result.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: printing system
10a: printing device
10b: inspection device
11: CPU
12: RAM
13: storage device
14: communication interface
15: user interface device
16: print engine
17: scanner
18: control bus
21: control unit
22: operation input unit
23: display unit
24: data transmission/reception unit
25: authentication unit
26: storage unit
27: image printing unit
28: image reading unit
31: original print image
40: display screen
41: scanned image
41a: colored dot
41b: colored line
42: identification information
43: image quality score
44a, 44b: comment box
45: image quality score

## Claims

1. An information processing system comprising:
a processor configured to:
evaluate a quality of a printed material printed by a printing device by comparing an original print image with a scanned image acquired by scanning the printed material; and
in a case where a defect that is estimated to affect an evaluation result occurs in the scanned image, notify a user that the defect occurs.

2. The information processing system according to claim 1, wherein the processor is configured to:
display a defect position on the scanned image.

3. The information processing system according to claim 2, wherein the processor is configured to:
distinguish and display for each defect whether the defect is a defect that occurs one-off on only one printed material or a defect that may occur continuously over a plurality of printed materials.

4. The information processing system according to claim 3, wherein the processor is configured to:
display a defect that occurs on only one scanned image, among a plurality of the scanned images corresponding to the same original print image, as the defect that occurs one-off on only one printed material, and display a defect that occurs continuously over the plurality of scanned images as the defect that may occur continuously over the plurality of printed materials.

5. The information processing system according to any one of claims 1 to 4, wherein the processor is configured to:
detect a defect from a newly acquired scanned image by inputting the newly acquired scanned image to a machine learning model trained using the scanned image and the defect included in the scanned image as teacher data.

6. The information processing system according to any one of claims 1 to 5, wherein the processor is configured to:
provide a notification of a degree of influence of the defect on the evaluation result.

7. The information processing system according to claim 6, wherein the processor is configured to:
acquire information on the degree of influence of the defect by using a scanned image from which the defect is removed via a complementation process.

8. A program causing a computer to execute:
evaluating a quality of a printed material printed by a printing device by comparing an original print image with a scanned image acquired by scanning the printed material; and
in a case where a defect that is estimated to affect an evaluation result occurs in the scanned image, notifying a user that the defect occurs.

9. An information processing method comprising:
evaluating a quality of a printed material printed by a printing device by comparing an original print image with a scanned image acquired by scanning the printed material; and
in a case where a defect that is estimated to affect an evaluation result occurs in the scanned image, notifying a user that the defect occurs.

## Amended claims

### Amended claims in accordance with Rule 137(2) EPC.

1. An information processing system (10) comprising:
a processor (11), **characterized in that** the processor is configured to:
evaluate a quality of a printed material printed by a printing device (10a) by comparing an original print image with a scanned image acquired by scanning the printed material to generate an image quality score as an evaluation result; and
in a case where a defect that is estimated to affect the evaluation result occurs in the scanned image, notify a user the evaluation result and the defect that affects the evaluation result.

2. The information processing system (10) according to claim 1, wherein the processor (11) is configured to:
display a defect position on the scanned image.

3. The information processing system (10) according to claim 2, wherein the processor (11) is configured to:
distinguish and display for each defect whether the defect is a defect that occurs one-off on only one printed material or a defect that may occur continuously over a plurality of printed materials.

4. The information processing system (10) according to claim 3, wherein the processor (11) is configured to:
display a defect that occurs on only one scanned image, among a plurality of the scanned images corresponding to the same original print image, as the defect that occurs one-off on only one printed material, and display a defect that occurs continuously over the plurality of scanned images as the defect that may occur continuously over the plurality of printed materials.

5. The information processing system (10) according to any one of claims 1 to 4, wherein the processor (11) is configured to:
detect a defect from a newly acquired scanned image by inputting the newly acquired scanned image to a machine learning model trained using the scanned image and the defect included in the scanned image as teacher data.

6. The information processing system (10) according to any one of claims 1 to 5, wherein the processor (11) is configured to:
provide a notification of a degree of influence of the defect on the evaluation result.

7. The information processing system (10) according to claim 6, wherein the processor (11) is configured to:
acquire information on the degree of influence of the defect by using a scanned image from which the defect is removed via a complementation process.

8. A computer program, **characterized by** comprising instructions which, when the program is executed by a computer (10), cause a computer (10) to execute:
evaluating a quality of a printed material printed by a printing device (10a) by comparing an original print image with a scanned image acquired by scanning the printed material to generate an image quality score as an evaluation result; and
in a case where a defect that is estimated to affect an evaluation result occurs in the scanned image, notifying a user the evaluation result and the defect that affects the evaluation result.

9. An information processing method carried out by a computer (10), **characterized by** comprising:
evaluating a quality of a printed material printed by a printing device (10a) by comparing an original print image with a scanned image acquired by scanning the printed material to generate an image quality score as an evaluation result; and
in a case where a defect that is estimated to affect an evaluation result occurs in the scanned image, notifying a user the evaluation result and the defect that affects the evaluation result.
